# EUROPÄISCHE PATENTSCHRIFT

(11) **EP 3 124 787 B1**
(45) Veröffentlichungstag und Bekanntmachung des Hinweises auf die Patenterteilung: **02.09.2020**
(21) Anmeldenummer: 16180524.7
(22) Anmeldetag: 21.07.2016
(51) Int. Cl.: F03D 7/02

(54) **STEUERUNG UND STEUERUNGSVERFAHREN FÜR EINE WINDENERGIEANLAGE**
DEVICE AND CONTROL METHOD FOR A WIND TURBINE
COMMANDE ET PROCEDE DE COMMANDE D'EOLIENNE

(30) Priorität: 30.07.2015 DE 102015009704
(43) Veröffentlichungstag der Anmeldung: 01.02.2017
(73) Patentinhaber: Senvion GmbH, 22297 Hamburg (DE)
(72) Erfinder: Wortmann, Svenja, 65929 Frankfurt (DE)
(74) Vertreter: Glawe, Delfs, Moll

(56) Entgegenhaltungen:
- EP-A2- 2 500 562
- DE-A1-102005 034 899
- TORBEN JUUL LARSEN ET AL: "Active load reduction using individual pitch, based on local blade flow measurements", WIND ENERGY, WILEY, CHICHESTER, GB, Bd. 8, Nr. 1, 16. Dezember 2004 (2004-12-16), Seiten 67-80, XP002504578, ISSN: 1099-1824, DOI: 10.1002/WE.141

## Beschreibung

Die Erfindung betrifft eine Steuerung für eine Windenergieanlage. Die Steuerung ist dazu ausgelegt, Messwerte und/oder externe Vorgaben zu verarbeiten, um Steuervorgaben für ein zyklisches Pitchen der Windenergieanlage zu ermitteln.

Durch zyklisches Pitchen kann Einfluss auf die Beanspruchung einer Windenergieanlage genommen werden, US 7,281,891 B1. Es können LIDAR-basierte Windmesswerte verwendet werden, um Informationen über ein Windfeld zu gewinnen, das in Kürze auf die Windenergieanlage auftreffen wird, DE 10 2012 019 663 A1, WO 2015 001 301 A1, WO 2010 086 631 A2. Es ist nicht ganz einfach, die richtige Beziehung zwischen Windmesswerten und dem zyklischen Pitchen herzustellen. Auch im wissenschaftlichen Artikel "Active Load Reduction Using Individual Pitch, Based on Local Blade Flow Measurements" von Larsen et al wird eine Methode zur Lastenreduktion offenbart.

Der Erfindung liegt die Aufgabe zugrunde, eine Steuerung und ein Steuerungsverfahren für eine Windenergieanlage vorzustellen, mit denen die Beanspruchung der Windenergieanlage vermindert wird. Ausgehend vom genannten Stand der Technik wird die Aufgabe gelöst mit den Merkmalen der unabhängigen Ansprüche. Vorteilhafte Ausführungsformen sind in den Unteransprüchen angegeben. Erfindungsgemäß ist in der Steuerung eine Kennlinie der Amplitude des zyklischen Pitchens über einem Windparameter hinterlegt. Die Kennlinie weist einen Extrempunkt auf, von dem aus die Kennlinie in beiden Richtungen ansteigt bzw. abfällt. Die Steuerung ist dazu ausgelegt, aus einem Messwert des Windparameters anhand der Kennlinie eine Steuervorgabe für die Amplitude des zyklischen Pitchens zu ermitteln.

Zunächst werden einige Begriffe erläutert. Zyklisches Pitchen bezeichnet einen Vorgang, bei dem der Pitchwinkel eines Rotorblatts während eines vollständigen Umlaufs des Rotors wenigstens einmal in eine erste Richtung und wenigstens einmal in eine dazu entgegengesetzte zweite Richtung verändert wird. Der Pitchwinkel kann während mehrerer aufeinanderfolgender Umläufe des Rotors auf die gleiche Weise oder im Wesentlichen die gleiche Weise verändert werden.

Beim zyklischen Pitchen gibt es eine Nullstellung, ausgehend von der die Veränderung des Pitchwinkels beginnt. Die Amplitude des zyklischen Pitchens bezeichnet die größte Winkeldifferenz zwischen dem tatsächlichen Pitchwinkel und der Nullstellung, die während des zyklischen Pitchens auftritt. Die Winkeldifferenz zwischen dem tatsächlichen Pitchwinkel und der Nullstellung wird immer positiv gezählt, es gibt also keine negative Amplitude.

Die Erfindung baut auf der Erkenntnis auf, dass die zyklischen Lastwechsel, denen eine Windenergieanlage unter dem Einfluss eines komplexen Windfelds während eines Rotorumlaufs ausgesetzt ist, nicht einfach mit der Windgeschwindigkeit stärker werden, wie man vermuten würde, sondern dass es Situationen gibt, in denen die zyklischen Lastwechsel trotz steigender Windstärke weniger stark werden. Mit der Kennlinie, die von einem Extrempunkt in beiden Richtungen ansteigt bzw. abfällt, wird diese Erkenntnis ausgenutzt, um das zyklische Pitchen so zu gestalten, dass die auftretenden Lasten vermindert werden.

Es hat sich herausgestellt, dass der erfindungsgemäße Effekt insbesondere dann auftritt, wenn die Windenergieanlage einer Schräganströmung ausgesetzt ist, also die Richtung des auf den Rotor auftreffenden Windfelds nicht parallel zur Rotorachse ist, sondern einen Winkel mit der Rotorachse einschließt. In einer bevorzugten Ausführungsform der Erfindung ist die Kennlinie deswegen einem Betriebszustand oder mehreren Betriebszuständen der Windenergieanlage zugeordnet, in denen die Windenergieanlage einer Schräganströmung ausgesetzt ist. Nimmt man an, dass die Schräganströmung (also der Winkel, unter dem der Wind auf den Rotor trifft, oder noch präziser auf die Rotorachsrichtung trifft) konstant bleibt, während die Windgeschwindigkeit sich ändert, so unterliegt die Windenergieanlage bei mittlerer Windgeschwindigkeit den am wenigsten starken zyklischen Lastwechseln. Ausgehend von dieser mittleren Windgeschwindigkeit werden die zyklischen Lastwechsel sowohl mit ansteigender als auch mit abfallender Windgeschwindigkeit stärker.

Die Anmelderin erklärt sich diesen Effekt wie folgt: Bei Schräganströmung ist der Verlauf von resultierender Windgeschwindigkeit und Anströmwinkel bzw. Auftriebsbeiwert über dem Umlauf gegenläufig. Im unteren Nennlastbereich bei positiven Anströmwinkeln und starker Belastung der Blätter, variiert der Auftriebsbeiwert über den Umlauf nur gering. Der Verlauf der Blattbelastungen wird von dem Verlauf der resultierenden Windgeschwindigkeit dominiert. Mit steigender Windgeschwindigkeit nehmen der mittlere Anströmwinkel und die Belastung der Blätter ab. Änderungen des Anströmwinkels bewirken nun eine stärkere Änderung des Auftriebsbeiwertes als bei niedrigen Windgeschwindigkeiten. Nun wird der Verlauf der Blattbelastungen vom Verlauf des Auftriebsbeiwertes dominiert.

Die Kennlinie kann also insbesondere so gestaltet sein, dass die Amplitude ausgehend von einer niedrigeren Windgeschwindigkeit abfällt, bis die Amplitude bei einer mittleren Windgeschwindigkeit auf einen Extrempunkt sinkt, und dass die Amplitude bei weiter steigender Windgeschwindigkeit wieder ansteigt.

Es kann ein Merkmal der Kennlinie sein, dass die Kennlinie in dem Extrempunkt auf null absinkt. Ist die Amplitude des zyklischen Pitchens gleich null, so findet das zyklische Pitchen nicht statt, sondern der Pitchwinkel folgt während des gesamten Rotorumlaufs der Vorgabe der normalen Betriebssteuerung zur Leistungs- und Drehzahlregelung, was in aller Regel bedeutet, dass der Pitchwinkel in der Nullstellung verbleibt. Mit dem Überschreiten des Extrempunkts kann eine Phasenumkehr des zyklischen Pitchens verbunden sein. Die Steuerung ist vorzugsweise so eingerichtet, dass sie dies beim Erstellen der Steuervorgabe berücksichtigt.

Es hat sich außerdem gezeigt, dass der erfindungsgemäße Effekt auftreten kann, wenn die Windenergieanlage einer Scherung ausgesetzt ist. Anders als bei einem idealisierten Windfeld hat das tatsächliche komplexe Windfeld nicht über die gesamte von dem Rotor überstrichene Fläche dieselbe Windgeschwindigkeit. Abweichende Windgeschwindigkeiten innerhalb des Windfelds werden als Scherung bezeichnet. Der Begriff Windgeschwindigkeit bezeichnet im Rahmen der Erfindung die mittlere Windgeschwindigkeit des Windfelds. Die erfindungsgemäße Kennlinie kann sich auf einen Zustand beziehen, in dem die Windenergieanlage einer Scherung ausgesetzt ist.

Abhängig jeweils von Richtung und Größe können die Auswirkungen von Scherung und Schräganströmung sich verstärken oder gegenseitig aufheben. In einer bevorzugten Ausführungsform werden deswegen sowohl die Scherung als auch die Schräganströmung berücksichtigt, indem die Kennlinie einem Zustand zugeordnet ist, in dem die Windenergieanlage sowohl einer Scherung als auch einer Schräganströmung ausgesetzt ist.

Windparameter bezeichnen im Rahmen der Erfindung allgemein die Größen, die das auf die Windenergieanlage auf treffende Windfeld charakterisieren. Zu den Windparametern gehören die Windstärke, die Schräganströmung und die Scherung.

Die Scherung und die Schräganströmung sind ihrerseits durch jeweils zwei Parameter gekennzeichnet, die erforderlich sind, um die Scherung bzw. die Schräganströmung in einem Koordinatensystem darzustellen. Welche Parameter dies sind, hängt von der Wahl des Koordinatensystems ab. Beispielsweise ist es möglich, die Schräganströmung und die Scherung jeweils in einen horizontalen und einen vertikalen Anteil aufzuteilen, so dass sich eine horizontale Schräganströmung, eine vertikale Schräganströmung sowie eine horizontale Scherung und eine vertikale Scherung ergeben. Jede dieser Größen kann beispielsweise als Winkel relativ zur Achse des Rotors definiert sein. Andere Darstellungsformen sind möglich, so kann beispielsweise die Scherung auch linear als Änderung der Windgeschwindigkeit in Bezug auf die Distanz zu einer Bezugsebene definiert werden. Alternativ wäre es auch möglich, die Scherung und die Schräganströmung in einem zweidimensionalen Polarkoordinatensystem darzustellen, indem jeweils eine Richtung und ein Winkel angegeben werden. Unabhängig von der Wahl des Koordinatensystems gibt es damit fünf Windparameter, die das Windfeld charakterisieren, nämlich die Windstärke sowie jeweils zwei Parameter für die Schräganströmung und die Scherung.

Im Rahmen der Erfindung ist es möglich, dass außer diesen fünf Windparametern keine weiteren Windparameter zur Charakterisierung des Windfelds verwendet werden. Gerade die Schräganströmung und die Scherung, jeweils in Abhängigkeit von der Windgeschwindigkeit, sind nämlich die Parameter, die für die Rotorblätter einen Lastwechsel pro Umlauf des Rotors erzeugen und denen deswegen durch zyklisches Pitchen entgegengewirkt werden kann.

Ein typisches Windfeld hat bereits eine natürliche Scherung, indem die Windgeschwindigkeit in Bodennähe allgemein etwas geringer ist als in größerer Höhe. Bevorzugt wird zur Darstellung der Scherung ein Koordinatensystem verwendet, das eine Symmetrie relativ zur natürlichen Scherung aufweist. Beispielsweise können die Achsen des Koordinatensystems geneigt sein, so dass auf beiden Achsen sowohl ein Anteil der horizontalen Scherung als auch ein Anteil der vertikalen Scherung aufgetragen ist. Durch diese Darstellungsform wird es erleichtert, zusätzliche (stochastische) Scherungen zu identifizieren.

In einer Ausführungsform der Erfindung ist in der Kennlinie die Amplitude des zyklischen Pitchens über der Windgeschwindigkeit aufgetragen, wobei die Kennlinie ausgehend von dem Extrempunkt in beiden Richtungen ansteigt. Unter Berücksichtigung dieser Kennlinie kann die Steuerung eine Steuervorgabe machen, gemäß der die Amplitude des zyklischen Pitchens bei der mittleren Windgeschwindigkeit kleiner ist als bei höherer oder niedrigerer Windgeschwindigkeit.

Die Kennlinie ist in einer bevorzugten Ausführungsform der Erfindung so angelegt, dass die übrigen Windparameter, die nicht durch die Kennlinie in eine Beziehung zur Amplitude des zyklischen Pitchens gesetzt werden, als konstant angenommen werden. Im genannten Beispiel ändert sich die Kennlinie, wenn der Winkel der Schräganströmung oder der Winkel der Scherung sich ändern. In einem vereinfachten Modell ist es möglich, einen linearen Zusammenhang zwischen dem Winkel der Schräganströmung und/oder dem Winkel der Scherung sowie der Amplitude des zyklischen Pitchens anzunehmen. Bei dieser Annahme ist es möglich, die Kennlinie anhand von Messwerten der Schräganströmung bzw. der Scherung durch lineare Umrechnung anzupassen.

Auch möglich ist es, für andere Werte der übrigen Windparameter eine alternative Kennlinie für die Amplitude des zyklischen Pitchens vorzusehen. Abhängig vom Wert der anderen Windparameter können also mehrere Kennlinien für die Amplitude des zyklischen Pitchens in der Steuerung hinterlegt sein. Für die Mehrzahl von Kennlinien sind unterschiedliche Darstellungsweisen möglich. Beispielsweise kann die Mehrzahl von Kennlinien in Form eines zweidimensionalen Kennfelds oder in Form eines mehrdimensionalen Kennraums dargestellt werden. Die Dimension des Kennraums kann der Anzahl der Windparameter entsprechen, die zur Charakterisierung des Windfelds herangezogen werden. Außer den erfindungsgemäßen Kennlinien kann der Kennraum auch Kennlinien umfassen, die keinen Extrempunkt im Sinne der Erfindung aufweisen. Es ist möglich, dass nur solche Kennlinien einen Extrempunkt im Sinne der Erfindung aufweisen, bei denen die Schräganströmung ungleich null ist. Es ist weiter möglich, dass nur solche Kennlinien einen Extrempunkt im Sinne der Erfindung aufweisen, bei denen die horizontale Schräganströmung ungleich null ist.

Da die Windparameter alle miteinander zusammenhängen, gibt es weitere Kennlinien, in denen die erfindungsgemäße Erkenntnis sich widerspiegelt. In solchen alternativen Kennlinien kann die Amplitude des zyklischen Pitchens über einem anderen Windparameter als der Windstärke aufgetragen sein. Die Kennlinie kann ausgehend von dem Extrempunkt in beide Richtungen ansteigen oder abfallen.

Wenn die einzelne Kennlinie auf der Annahme basiert, dass bestimmte Windparameter konstant bleiben, so trifft dies auf ein reales Windfeld nicht ohne weiteres zu. Vielmehr muss davon ausgegangen werden, dass sich in einem realen Windfeld alle Windparameter laufend ändern. Für die erfindungsgemäße Steuerung bedeutet dies, dass laufend zwischen verschiedenen Kennlinien hin- und hergewechselt wird. Es ist möglich, dass während eines Umlaufs des Rotors mehrfach zwischen verschiedenen Kennlinien hin- und hergewechselt wird. Die tatsächliche Pitchkurve des zyklischen Pitchens kann aus diesem Grund schon dann einen komplexen Verlauf haben, wenn die aus der einzelnen Kennlinie abgeleitete Pitchkurve eine einfache Sinuskurve ist.

Die Steuervorgabe für das zyklische Pitchen kann so ausgebildet sein, dass der Pitchwinkel während eines Umlaufs des Rotors ausgehend von einer Nullstellung des Pitchwinkels sowohl in die eine Richtung als auch in die andere Richtung variiert wird. Die Variation in der einen Richtung kann symmetrisch sein zu der Variation in die andere Richtung. Es kann sich um eine Steuervorgabe handeln, bei der der Pitchwinkel kontinuierlich verändert wird, was bedeutet, dass die maximale Winkeldifferenz zur Nullstellung (= Amplitude des zyklischen Pitchens) nur kurzzeitig auftritt. Möglich sind auch Steuervorgaben, bei denen die maximale Winkeldifferenz für eine kurze Zeit aufrecht erhalten bleibt. In einer bevorzugten Ausführungsform hat das zyklische Pitchen einen sinusförmigen Verlauf, wobei die Periode der Sinuskurve einem vollständigen Umlauf des Rotors entspricht. Eine solche Sinuskurve kann durch Amplitude und Phase eindeutig definiert werden. Im Sinne der Erfindung ergibt sich die eindeutige Definition der Pitchkurve also durch die Amplitude des zyklischen Pitchens und die Winkelposition des Rotors, in der die Amplitude erreicht wird. Eine Einschränkung auf solche einfachen Kurven macht die Erfindung nicht. Grundsätzlich können beliebige Kurven definiert werden, indem gewünschte Werte für den Pitchwinkel über der Winkelposition der Rotorblatts aufgetragen werden.

Das zyklische Pitchen ist vorzugsweise so ausgestaltet, dass mehrere Rotorblätter einer Windenergieanlage jeweils eine eigene Steuervorgabe für das zyklische Pitchen erhalten. Die Steuervorgaben können derart sein, dass bezogen auf das Koordinatensystem der Gondel, relativ zu der sich der Rotor dreht, die Pitchkurven alle identisch sind.

Wird der Pitchwinkel ausgehend von der Nullstellung während eines vollständigen Rotorumlaufs einmal in die eine Richtung und einmal in die andere Richtung variiert, so ergeben sich zwei Nulldurchgänge. Die Nulldurchgänge können in einer Winkelposition des Rotors erfolgen, die relativ zur Richtung der Schräganströmung und/der zur Richtung der Scherung definiert ist.

Die Pitchkurve des zyklischen Pitchens kann eine lineare Überlagerung sein aus einer der Schräganströmung zugeordneten Teilkurve und einer der Scherung zugeordneten Teilkurve. Die Teilkurve der Schräganströmung kann symmetrisch zur Richtung der Schräganströmung sein. Die Teilkurve der Scherung kann symmetrische zur Richtung der Scherung sein. Wird für die Schräganströmung und die Scherung eine Darstellungsform mit einer Aufspaltung in einen horizontalen Anteil und einen vertikalen Anteil gewählt, so kann sich die Pitchkurve als Überlagerung aus vier Teilkurven ergeben.

Insbesondere können bei der Teilkurve der Schräganströmung die beiden Nulldurchgänge der Pitchkurve in den Winkelpositionen des Rotors erfolgen, in denen das betreffende Rotorblatt die Richtung der Schräganströmung kreuzt. Ist beispielsweise die Schräganströmung eine rein horizontale Schräganströmung, so erfolgt der Nulldurchgang, wenn das Rotorblatt horizontal ausgerichtet ist. Es zeigt sich, dass diese Gestaltung der Teilkurve der Schräganströmung insbesondere dann geeignet ist, die Beanspruchung der Windenergieanlage zu vermindern, wenn die Windenergieanlage einer hohen Windgeschwindigkeit ausgesetzt ist, beispielsweise einer Windgeschwindigkeit von mehr als 20 m/s. Bei niedrigeren Windgeschwindigkeiten von beispielsweise weniger als 15 m/s kann es von Vorteil sein, wenn der Nulldurchgang der Teilkurve der Schräganströmung zeitlich bzw. in der Phasenlage leicht nach hinten geschoben wird. Beispielsweise kann der Rotor sich um 10° bis 30° weiter gedreht haben, bevor der Nulldurchgang des zyklischen Pitchens erfolgt.

Die Messwerte von Windparametern, die in der erfindungsgemäßen Steuerung verarbeitet werden, können auf unterschiedliche Weise gewonnen werden. Beispielsweise können auf der Windenergieanlage Sensoren angeordnet sein, die die Windmesswerte aufnehmen. Die Sensoren können an der Gondel und/oder an dem Rotor der Windenergieanlage aufgehängt sein. Windenergieanlage bezeichnet eine Einrichtung, bei der über einen Rotor ein Generator angetrieben wird, um elektrische Energie zu erzeugen. Möglich ist auch, Sensoren auf einer zu der Windenergieanlage benachbarten Einrichtung anzuordnen. Bevorzugt sind die Sensoren im Wesentlichen in derselben Höhe angeordnet wie der Rotor der Windenergieanlage. Informationen über das Windfeld können auch aus Messwerten abgeleitet werden, die auf einer benachbarten Windenergieanlage gewonnen wurden.

Bevorzugt werden die Messwerte so aufgenommen, dass sich eine Information über jeden der genannten Windparameter ableiten lässt. Aus den Messwerten ergibt sich damit eine Information über die mittlere Windgeschwindigkeit sowie über die Schräganströmung und die Scherung in jeweils zwei Dimensionen. In der Steuerung werden vorzugsweise alle Windparameter verarbeitet.

Die Sensoren können so gestaltet sein, dass sie den Istzustand des Windfelds betreffen, also dasjenige Windfeld, das aktuell auf den Rotor wirkt. Zusätzlich oder alternativ dazu ist auch die Aufnahme von Forward-Messwerten möglich zur Ermittlung von Windparametern, denen die Windenergieanlage in Kürze ausgesetzt sein wird. Die Aufnahme von Forward-Messwerten kann beispielsweise durch LIDAR- und/oder SODAR-Sensoren erfolgen. LIDAR ist eine Kurzform für Light Detection an Ranging und bezeichnet ein Messverfahren, bei dem Lichtimpulse ausgesendet werden und bei dem das von der Atmosphäre zurückgestreute Licht detektiert wird. Anhand des zurückgestreuten Lichts kann auf die gesuchten Windparameter geschlossen werden. SODAR ist ein entsprechendes Messverfahren, bei dem Schallwellen statt Lichtimpulsen ausgesendet werden und bei dem die von der Atmosphäre zurückgeworfenen Schallsignale detektiert werden.

Bei der Berücksichtigung der Forward-Messwerte in der erfindungsgemäßen Steuerung wird vorzugsweise die Laufzeit berücksichtigt zwischen dem Zeitpunkt, zu dem die Forward-Messwerte aufgenommen wurden, und dem Zeitpunkt, zu dem die Windenergieanlage den betreffenden Windparametern tatsächlich ausgesetzt sind. Vorzugsweise ist die Steuerung so eingerichtet, dass die Forward-Messwerte zu einem Zeitpunkt in die Steuervorgabe für das zyklische Pitchen einfließen, der kurz vor dem Zeitpunkt liegt, zu dem die Windenergieanlage den Windparametern gemäß den Forward-Messwerten tatsächlich ausgesetzt ist. Insbesondere können bei der Wahl des Zeitpunkts die Reaktionszeit der Windenergieanlage, die Zeit für die Datenverarbeitung und/oder der Zeitverzug durch Filterung berücksichtigt werden. Spätestens aber sollten die Forward-Messwerte einfließen, sobald die Windparameter tatsächlich auf die Windenergieanlage oder die Komponente der Windenergieanlage wirken.

Der Sensor zur Aufnahme der Forward-Messwerte kann auf der Windenergieanlage angeordnet sein. Die Windenergieanlage umfasst einen Rotor, der über eine Rotorwelle an einen Generator angeschlossen ist. Der Generator ist innerhalb einer Gondel angeordnet, die drehbar auf einem Turm gelagert ist. Der Sensor für die Forward-Messwerte kann an der Gondel angeordnet sein. Der Sensor kann so ausgerichtet sein, dass er Messwerte in Luv aufnimmt, also in der Richtung, aus der der Wind kommt. Sendet der Sensor Messsignale aus, so können diese entgegen der Windrichtung gesendet werden. Auf diese Weise können Informationen über ein Windfeld gewonnen werden, das in Kürze auf die Windenergieanlage einwirken wird.

Zusätzlich oder alternativ dazu ist es möglich, Sensoren für Forward-Messwerte an einem oder mehreren Rotorblättern anzubringen. Bevorzugt umfasst ein einzelnes Rotorblatt eine Mehrzahl von Sensoren, die über die Blattlänge verteilt sind. Auf diese Weise können die Sensoren eine große Fläche überstreichen. Vorzugsweise sind die Sensoren auch in diesem Fall so ausgerichtet, dass sie Messwerte in Luv aufnehmen.

Eine zusätzliche oder alternative Möglichkeit zur Gewinnung von Messwerten ist die Aufnahme von Ist-Werten bei einer Komponente der Windenergieanlage. Solche Messwerte können zur Ermittlung einer Steuervorgabe für eine andere Komponente der Windenergieanlage verwendet werden, die zu einem späteren Zeitpunkt in der betreffenden Position ist. Insbesondere kann ein Ist-Wert bei einem Rotorblatt aufgenommen werden und der Messwert zur Ermittlung einer Steuervorgabe für ein Rotorblatt verwendet werden, das zu einem späteren Zeitpunkt in derselben Position sein wird. Die Laufzeit, bis das Rotorblatt in der betreffenden Position ist, ergibt sich aus der Drehzahl des Rotors. Hat der Rotor beispielsweise drei Rotorblätter, so entspricht die Laufzeit einem Drehwinkel von 120° oder einem Vielfachen davon.

Eine weitere zusätzliche oder alternative Möglichkeit zur Gewinnung von Forward-Messwerten ist die Aufnahme von Ist-Werten an einem von der Windenergieanlage beabstandeten Ort. Vorzugsweise ist dieser Ort in Luv angeordnet, so dass Messwerte über ein Windfeld aufgenommen werden, dass in Kürze auf die Windenergieanlage auftreffen wird. Die Messwerte können beispielsweise auf einem Mast aufgenommen werden, der in geeigneter Position errichtet ist. Möglich ist auch, dass Messwerte als Forward-Messwerte verwendet werden, die auf einer benachbarten Windenergieanlage aufgenommen wurden.

Die erfindungsgemäße Steuerung kann so ausgelegt sein, dass sie auch für die Betriebssteuerung des Pitchwinkels zuständig ist. Bei der Betriebssteuerung werden Steuervorgaben gemacht, gemäß denen der Pitchwinkel so eingestellt wird, dass die richtige Menge an Leistung aus dem Wind aufgenommen wird. Bei der Betriebssteuerung erhalten üblicherweise alle Rotorblätter des Rotors dieselbe Steuervorgabe für den Pitchwinkel. In diese Betriebs-Steuervorgabe fließt beispielsweise ein, wieviel Leistung der Generator aufnehmen kann bzw. wieviel Leistung in das Netz übertragen werden kann. Die erfindungsgemäße Kennlinie kann insbesondere in dem Betriebsbereich Anwendung finden, in dem die Windenergieanlage bei Nennleistung betrieben wird. Bei Nennleistung wird der Pitchwinkel der Rotorblätter verändert, um die Leistung konstant zu halten und die Rotordrehzahl zu begrenzen. Heutige Windenergieanlagen sind häufig so ausgelegt, dass sie bei Windgeschwindigkeiten zwischen etwa 12 m/s und 24 m/s mit Nennleistung betrieben werden können.

Die Steuerung kann so ausgelegt sein, dass die erfindungsgemäße Steuervorgabe für das zyklische Pitchen der Betriebs-Steuervorgabe linear überlagert wird. Soll beispielsweise ausgehend von einer 0°-Winkelposition, in der das Rotorblatt senkrecht nach oben zeigt, die maximale Auslenkung (=Amplitude) des zyklischen Pitchens in einer Winkelposition des Rotorblatts von 30° erfolgen, so kann die Steuervorgabe für diese Winkelposition des Rotorblatts lauten, dass der Pitchwinkel um +3° verstellt wird. Entsprechend kann für eine Winkelposition des Rotorblatts von 210° eine Anpassung des Pitchwinkels um -3° erfolgen. Erfolgt das zyklische Pitchen sinusförmig, so ist die Kurve des zyklischen Pitchens durch diese Angaben bereits eindeutig definiert. Soll das zyklische Pitchen anhand eines anderen Kurvenverlauf erfolgen, so ist es auch möglich, für jede Winkelposition des Rotorblatts eine entsprechende Vorgabe für die linear überlagerte Verstellung des Pitchwinkels zu machen.

Es ist möglich, dass die Steuervorgabe für das zyklische Pitchen für alle Rotorblätter der Windenergieanlage gleich ist. Im genannten Beispiel bedeutet dies, dass bei jedem der Rotorblätter in einer Winkelposition von 30° der Pitchwinkel um +3° und in einer Winkelposition von 210° um -3° verstellt wird. Bei einer Weiterbildung der Erfindung kann vorgesehen sein, dass die Rotorblätter unterschiedliche Steuervorgaben für das zyklische Pitchen erhalten. Dies kann beispielsweise dazu dienen, eine Unwucht des Rotors auszugleichen. Unwuchten können sich unter anderem ergeben durch Eisansatz an einem Rotorblatt oder einen Fehler bei der Produktion des Rotorblatts. Diese Korrektur kann durch eine weitere lineare Überlagerung in der Steuervorgabe für das zyklische Pitchen erfolgen.

Die Erfindung betrifft außerdem ein Steuerungsverfahren für eine Windenergieanlage, bei dem Messwerte und/oder externe Vorgaben verarbeitet werden, um Steuervorgaben für ein zyklisches Pitchen der Windenergieanlage zu ermitteln. Erfindungsgemäß wird anhand einer Kennlinie der Amplitude des zyklischen Pitchens über einem Windparameter unter Verarbeitung eines Messwerts des Windparameters eine Steuervorgabe für die Amplitude des zyklischen Pitchens ermittelt. Die Kennlinie hat einen Extrempunkt, von dem aus die Kennlinie in beiden Richtungen ansteigt bzw. abfällt.

Das Steuerungsverfahren kann mit weiteren Merkmalen fortgebildet werden, die im Zusammenhang der erfindungsgemäßen Steuerung beschrieben sind. Die Steuerung kann mit weiteren Merkmalen fortgebildet werden, die im Rahmen des erfindungsgemäßen Steuerungsverfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine mit einem LIDAR-System ausgerüstete Windenergieanlage;
- Fig. 2:: eine schematische Darstellung verschiedener Windparametern;
- Fig. 3:: eine erfindungsgemäße Steuerung;
- Fig. 4:: eine erfindungsgemäße Kennlinie; und
- Fig. 5:: eine grafische Darstellung des zyklischen Pitchens.

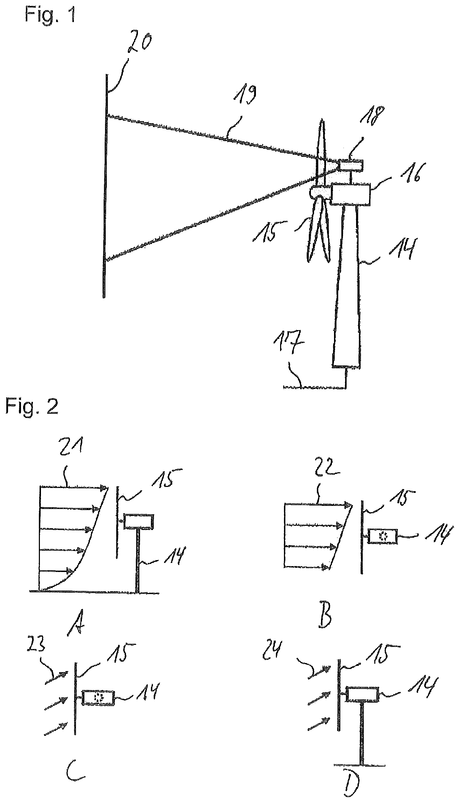

Eine in Fig. 1 gezeigte Windenergieanlage 14 umfasst einen Rotor 15, der einen im Inneren einer Gondel 16 angeordneten Generator antreibt. Die mit dem Generator erzeugte elektrische Energie wird über einen Anschluss 17 in ein elektrisches Netz geleitet. Die Gondel 16 ist relativ zu dem Turm der Windenergieanlage 14 drehbar, so dass der Rotor 15 relativ zum Wind ausgerichtet werden kann. Im Betrieb der Windenergieanlage 14 wird die Gondel 16 so ausgerichtet, dass der Rotor 15 in Richtung des Windes weist, also nach Luv.

Die Windenergieanlage 14 ist mit einer LIDAR-Einrichtung 18 ausgestattet, die Lichtimpulse 19 aussendet, um Informationen über ein Windfeld 20 zu gewinnen, das sich in Richtung des Rotors 15 bewegt. Die LIDAR-Einrichtung wertet von der Atmosphäre zurückgestreute Lichtsignale aus, um die gewünschten Informationen über das Windfeld 20 zu gewinnen.

Gemäß Fig. 2 gehören zu den Windparametern, die mit der LIDAR-Einrichtung ermittelt werden, die vertikale Scherung 21 (Fig. 2A), die horizontale Scherung 22 (Fig. 2B), die horizontale Schräganströmung 23 (Fig. 2C) und die vertikale Schräganströmung 24 (Fig. 2D). Sowohl die Scherung 21, 22 als auch die Schräganströmung 23, 24 bewirken einen periodischen Lastwechsel auf den Rotor 15, wobei der Lastwechsel einmal pro Umlauf des Rotors auftritt. Jede dieser Größen stellt einen Windparameter im Sinne der Erfindung dar. Zusammen mit der mittleren Windgeschwindigkeit des Windfelds 20, die mit dem LIDAR-Modul 18 ebenfalls ermittelt wird, werden bei dem Steuerungsverfahren fünf Windparameter berücksichtigt.

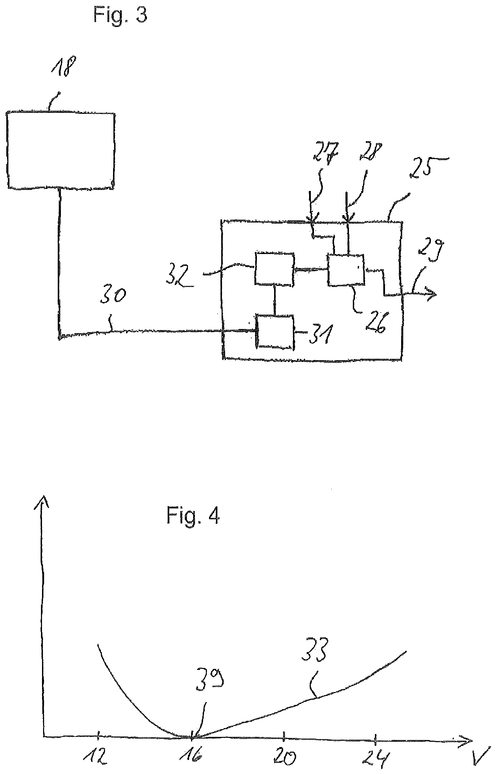

Die Steuerung 25 der Windenergieanlage 14 wird anhand von Fig. 3 erläutert. Die Steuerung 25 umfasst eine Steuereinheit 26, der über einen ersten Eingang Messwerte 27 und über einen zweiten Eingang Vorgaben 28 von außen zugeführt werden. Die Messwerte können beispielsweise den Zustand des elektrischen Systems der Windenergieanlage 14, den Zustand des elektrischen Netzes oder die aktuelle Windstärke betreffen, der die Windenergieanlage 14 ausgesetzt ist. Die Vorgaben von außen können beispielsweise von einer Zentrale des Übertragungsnetzes stammen und die elektrische Spannung betreffen, mit der in das Netz eingespeist werden soll. Die Steuereinheit 26 verarbeitet die Messwerte und die Vorgaben von außen und ermittelt daraus Steuervorgaben 29, die an die betreffenden Stellglieder der Windenergieanlage 14 geleitet werden, sodass die Windenergieanlage 14 ihren Betrieb gemäß den Steuervorgaben 29 einstellen kann. Gegenstand der Steuervorgabe kann beispielsweise eine Einstellung des Generators oder des Umrichters sein, mit der der Anteil von Blindleistung beeinflusst wird. Außerdem gehört zu den Steuervorgaben 29 eine Vorgabe für den Pitchwinkel der Rotorblätter. Die Steuereinheit 26 übernimmt auf diese Weise die Betriebs-Steuerung der Windenergieanlage 14. Vorzugsweise wird die Steuerung 25 als geschlossenen Regelkreis betrieben, bei dem die durch die Steuervorgaben 29 bewirkten Änderungen gemessen werden und zur Ermittlung neuer Steuervorgaben 29 genutzt werden.

Die Steuerung 25 ist über eine Leitung 30 mit der LIDAR-Einrichtung 18 verbunden und wird von der LIDAR-Einrichtung 18 mit Forward-Messwerten über die Windparameter des Windfelds 20 versorgt. Dem Windfeld 20 ist die Windenergieanlage 14 nicht aktuell ausgesetzt, sondern das Windfeld 20 hat noch einen Abstand von beispielsweise einigen 100 m zu der Windenergieanlage 14 und bewegt sich in Richtung der Windenergieanlage 14. Das Windfeld 20 wird also in Kürze auf den Rotor 15 treffen. Anders als die Messwerte, die der Steuerung 25 über den Eingang 27 zugeführt werden, betreffen die Forward-Messwerte von der LIDAR-Einheit nicht den aktuellen Betriebszustand der Windenergieanlage 14, sondern einen zukünftigen Betriebszustand.

Die Forward-Messwerte werden in einer Recheneinheit 31 verarbeitet, um eine Steuervorgabe für das zyklische Pitchen zu ermitteln. Dazu werden zunächst aus den reinen LIDAR-Messdaten die Windparameter berechnet und dann die Steuervorgabe für das zyklische Pitchen ermittelt. Das zyklische Pitchen hat den Zweck, die Beanspruchung durch die zyklischen Lastwechsel, die sich aus der Schräganströmung und der Scherung ergeben, zu vermindern. Der Pitchwinkel eines Rotorblatts wird also während eines Umlaufs des Rotors so verändert, dass den zyklischen Lastwechseln entgegengewirkt wird.

Dazu ermittelt der Steuerrechner 31 eine erste Teilkurve, die dazu bestimmt ist, der vertikalen Scherung 21 entgegenzuwirken. Der Steuerrechner 31 ermittelt eine zweite Teilkurve, die dazu bestimmt ist, der horizontalen Scherung 22 entgegenzuwirken. Der Steuerrechner 31 ermittelt eine dritte Teilkurve, die dazu bestimmt ist, der horizontalen Schräganströmung 23 entgegenzuwirken. Der Steuerrechner 31 ermittelt eine vierte Teilkurve, die dazu bestimmt ist, der vertikalen Schräganströmung 24 entgegenzuwirken. Jede Teilkurve definiert einen Verlauf für den Pitchwinkel während eines Umlaufs des Rotors. Die Pitchkurve des zyklischen Pitchens wird aus den vier Teilkurven durch lineare Überlagerung gewonnen. Die Pitchkurve bezieht sich auf einen momentanen Zustand des Windfelds. Bei geänderten Windmesswerten kann sich eine geänderte Pitchkurve ergeben, was in der Praxis bedeuten kann, dass die Pitchkurve laufend angepasst wird.

Die Kurven sind in diesem Ausführungsbeispiel sinusförmig. Sie beginnen also in einer bestimmten Winkelposition des Rotorblatts in einer Nullstellung des zyklischen Pitchens. Die Nullstellung entspricht der Steuervorgabe 29 für den Pitchwinkel, die die Steuereinheit 26 im Rahmen der normalen Betriebssteuerung, insbesondere der Leistungs- und Drehzahlregelung, anhand der Messwerte 27 und der Vorgaben 28 ermittelt. Gemäß der Sinuskurve wird der Pitchwinkel im Verlauf eines Umlaufs des Rotors zunächst in die eine Richtung verändert, durchläuft dann die Nullstellung und wird in die andere Richtung verändert, bis der Pitchwinkel nach einem vollständigen Umlauf des Rotors wieder zu dem Ausgangspunkt zurückkehrt. Durch die Überlagerung der vier Teilkurven ergibt sich eine Gesamtkurve für das zyklische Pitchen, die sowohl die Beanspruchung durch die Scherung als auch die Beanspruchung durch die Schräganströmung so weit wie möglich reduziert.

Die Gesamtkurve wird an ein Laufzeit-Modul 32 geleitet. Das Laufzeit-Modul 32 verarbeitet den von der LIDAR-Einheit 18 erhaltenen Messwert über die mittlere Windgeschwindigkeit des Windfelds 20 und ermittelt daraus einen Zeitpunkt, zu dem das Windfeld 20 voraussichtlich auf den Rotor 15 treffen wird. Unter Berücksichtigung der Reaktionszeit der Windenergieanlage 14 sowie der Zeit für die Datenverarbeitung und den Zeitverzug durch die notwendige Filterung leitet das Laufzeit-Modul 32 die Gesamtkurve kurz vor dem Eintreffen des Windfelds 20 an die Steuereinheit 26. Die Steuereinheit 26 überlagert die Gesamtkurve im Wege einer Vorsteuerung über die normalen Steuervorgabe für den Pitchwinkel. Diese Steuervorgabe wird von der Windenergieanlage 14 gerade zu dem Zeitpunkt umgesetzt, zu dem das Windfeld 20 auf den Rotor 15 trifft.

Die Ermittlung der Teilkurven für das zyklische Pitchen wird nachfolgend am Beispiel der horizontalen Schräganströmung erläutert. Der Steuerrechner 31 verwendet eine Kennlinie 33, wie sie beispielhaft in Fig. 4 dargestellt ist. Auf der horizontalen Achse ist die Windgeschwindigkeit V in Meter pro Sekunde aufgetragen. Auf der vertikalen Achse ist die Amplitude des zyklischen Pitchens aufgetragen, also die maximale Auslenkung des Pitchwinkels gegenüber der Zentralstellung, die der Pitchwinkel während des zyklischen Pitchens erreicht. Die Amplitude fällt bei einer Windgeschwindigkeit V von etwa 16 m/s auf null ab. Die Kennlinie 33 hat damit einen Extrempunkt 39 im Sinne der Erfindung. Die Kennlinie 33 ist einem bestimmten Winkel der horizontalen Schräganströmung zugeordnet. Wird der Rotor 15 unter einem anderen Winkel schräg angeströmt, so verwendet der Steuerrechner 31 eine alternative Kennlinie. Die alternative Kennlinie kann sich gegebenenfalls daraus ergeben, dass von einem linearen Zusammenhang zwischen der Amplitude und dem Windparameter ausgegangen wird und die Kennlinie entsprechend umgerechnet wird. Fig. 4 zeigt nur den Kennlinienverlauf für ein ausgesuchtes Beispiel. Je nach Wahl des Koordinatensystems, der Achsenmaßstäbe und der Vorzeichenkonvention kann sich ein erheblich abweichender Verlauf der Kennlinie, beispielsweise auch ein Maximum statt eines Minimums im mittleren Kennlinienteil ergeben. Auch der Kennlinienbereich kann auf deutlich niedrigere Windgeschwindigkeiten (unterer Teillastbetrieb) oder deutlich höhere Windgeschwindigkeiten (oberer Teillastbetrieb) ausgedehnt sein.

Anhand des von der LIDAR-Einrichtung 18 erhaltenen Forward-Messwerts für die horizontale Schräganströmung 23 wählt der Steuerrechner 31 aus seinem Speicher die passende Kennlinie 33 aus einer Vielzahl von abgelegten Kennlinien aus oder der Steuerrechner 31 ermittelt rechnerisch eine passende Kennlinie aus einer im Speicher abgelegten Kennlinie. Anhand des Forward-Messwerts für die mittlere Windgeschwindigkeit V kann aus der Kennlinie 33 ein Wert für die Amplitude des zyklischen Pitchens abgelesen werden. Die Phase des zyklischen Pitchens wird relativ zur Richtung der horizontalen Schräganströmung 23 bestimmt. Danach findet der Nulldurchgang des zyklischen Pitchens dort statt, wo das Rotorblatt die Richtung der Schräganströmung kreuzt, also dort, wo das Rotorblatt ebenfalls horizontal ausgerichtet ist.

Die Kurve des zyklischen Pitchens ist eine Sinuskurve, die anhand der beiden Parameter Amplitude und Phase bereits weitgehend bestimmt ist. Die einzige noch fehlende Information ist die Richtung, in die der Pitchwinkel ausgehend von dem betreffenden Nulldurchgang ausgelenkt wird. Dazu ist in dem Speicher des Steuerrechner 31 die zusätzliche Informationen hinterlegt, dass bei einer Windgeschwindigkeit V von 16 m/s eine Phasenumkehr stattfindet. Bei Windgeschwindigkeiten V von weniger als 16 m/s wird der Pitchwinkel ausgehend von dem betreffenden Nulldurchgang in die eine Richtung ausgelenkt. Bei Windgeschwindigkeiten V von mehr als 16 m/s wird der Pitchwinkel ausgehend von dem betreffenden Nulldurchgang in die andere Richtung ausgelenkt. Damit ist die Sinuskurve für die horizontale Schräganströmung 23 eindeutig bestimmt.

Entsprechende Kurven für das zyklische Pitchen werden für die vertikale Schräganströmung 24, die vertikale Scherung 21 und die horizontale Scherung 22 ermittelt. Eine lineare Überlagerung der vier Kurven ergibt eine Gesamtkurve für das zyklische Pitchen. Gegebenenfalls können auch weitere Kurven für zyklisches Pitchen linear oder nichtlinear überlagert werden, beispielsweise eine Funktionalität zur Dämpfung von lateralen Querschwingungen des Turms.

Die Kennlinie in Fig. 4 deckt im Wesentlichen den Bereich der Windstärke V ab, in dem die Windenergieanlage 14 mit Nennleistung betrieben werden kann. Aus der in Fig. 4 gezeigten Kennlinie 33 ergibt sich, dass bei der relativ niedrigen Windgeschwindigkeit V von 12 m/s die Amplitude des zyklischen Pitchens groß ist. Bei einer Windgeschwindigkeit V von ungefähr 16 m/s sinkt die Amplitude des zyklischen Pitchens auf null ab. Der Pitchwinkel bleibt dann fest in seiner durch die Betriebssteuerung vorgegebenen Nullstellung. Mit weiter steigender Windgeschwindigkeit V steigt die Amplitude des zyklischen Pitchens wieder an, wobei die Phasenlage nun genau umgekehrt ist, also um 180° verschoben ist.

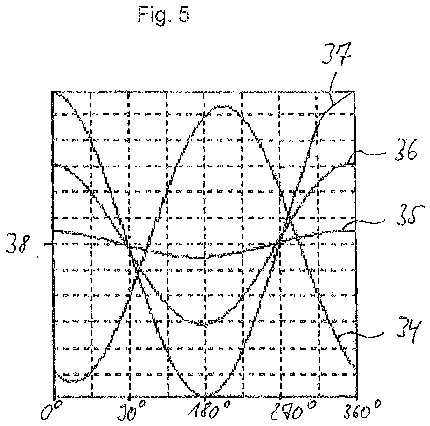

Verschiedene Möglichkeiten für Pitchkurven, die der Steuerrechner 31 auf diese Weise ermittelt, sind in Fig. 5 dargestellt. Auf der horizontalen Achse ist die Winkelposition des Rotorblatts aufgetragen, wobei das Rotorblatt bei 0° senkrecht nach oben zeigt. Auf der vertikalen Achse ist die Auslenkung des Pitchwinkels gegenüber der Nullstellung 38 des Pitchwinkels aufgetragen. Die Pitchkurve 34 bezieht sich auf eine Windgeschwindigkeit V von 12 m/s, die Pitchkurve 35 bezieht sich auf eine Windgeschwindigkeit V von 16 m/s, die Pitchkurve 36 bezieht sich auf eine Windgeschwindigkeit V von 20 m/s, die Pitchkurve 37 bezieht sich auf eine Windgeschwindigkeit V von 24 m/s.

Am Beispiel der Pitchkurve 37 ist zu sehen, dass der Nulldurchgang des zyklischen Pitchens in einer Winkelposition des Rotorblatts von 90° stattfindet. Das Rotorblatt ist beim Nulldurchgang also horizontal ausgerichtet. Die maximale Auslenkung des Pitchwinkels (= Amplitude) wird bei 0° und 180° erreicht. Die Pitchkurven 34 bis 37 verdeutlichen außerdem die unterschiedlichen Amplituden in Abhängigkeit von der Windgeschwindigkeit V sowie die Phasenumkehr bei einer Windgeschwindigkeit V von etwa 16 m/s.

Der Fig. 5 ist außerdem der weitere Aspekt der Erfindung zu entnehmen, dass die Pitchkurve 34 eine etwas verschobene Phasenlage hat. Der Nulldurchgang der Pitchkurve 34 erfolgt nicht in einer Winkelposition des Rotorblatts von 90°, sondern etwas verzögert bei etwa 110°. Es hat sich herausgestellt, dass diese etwas nach hinten verschobene Phasenlage des zyklischen Pitchens bei einer Windgeschwindigkeit von 12 m/s am besten geeignet ist, die Beanspruchung der Windenergieanlage 14 gering zu halten.

## Patentansprüche

1. Steuerung für eine Windenergieanlage (14), wobei die Steuerung (25) dazu ausgelegt ist, Messwerte (27) und/oder externe Vorgaben (28) zu verarbeiten, um Steuervorgaben (29) für ein zyklisches Pitchen der Windenergieanlage (14) zu ermitteln, **dadurch gekennzeichnet, dass** in der Steuerung (25) eine Kennlinie (33) der Amplitude des zyklischen Pitchens über einem Windparameter (V, 21, 22, 23, 24) hinterlegt ist, wobei die Kennlinie (33) einen Extrempunkt (39) aufweist, von dem aus die Kennlinie (33) in beiden Richtungen ansteigt bzw. abfällt, und dass die Steuerung (25) dazu ausgelegt ist, aus einem Messwert des Windparameters (V, 21, 22, 23, 24) anhand der Kennlinie (33) eine Steuervorgabe (29) für die Amplitude des zyklischen Pitchens zu ermitteln.

2. Steuerung nach Anspruch 1, **dadurch gekennzeichnet, dass** die Kennlinie (33) einem Betriebszustand oder mehreren Betriebszuständen zugeordnet ist, in denen die Windenergieanlage (14) einer Schräganströmung (23, 24) ausgesetzt ist.

3. Steuerung nach Anspruch 1 oder 2, **dadurch gekennzeichnet, dass** in der Kennlinie (33) die Amplitude des zyklischen Pitchens über der Windgeschwindigkeit (V) aufgetragen ist.

4. Steuerung nach Anspruch 3, **dadurch gekennzeichnet, dass** die Kennlinie (33) beginnend mit einer niedrigeren Windgeschwindigkeit (V) abfällt, bis die Kennlinie (33) bei einer mittleren Windgeschwindigkeit (V) auf einen Extrempunkt (39) sinkt und dass die Kennlinie (33) mit weiter steigender Windgeschwindigkeit (V) wieder ansteigt.

5. Steuerung nach Anspruch 4, **dadurch gekennzeichnet, dass** die Kennlinie (33) in dem Extrempunkt (39) auf null absinkt.

6. Steuerung nach einem der Ansprüche 1 bis 5, **dadurch gekennzeichnet, dass** sich mit dem Überschreiten des Extrempunkts (39) die Phase des zyklischen Pitchens umkehrt.

7. Steuerung nach einem der Ansprüche 1 bis 6, **dadurch gekennzeichnet, dass** die Kennlinie (33) einem Betriebszustand oder mehreren Betriebszuständen zugeordnet ist, in denen die Windenergieanlage (14) einer Scherung ausgesetzt ist.

8. Steuerung nach einem der Ansprüche 1 bis 7, **dadurch gekennzeichnet, dass** sie eingerichtet ist, Messwerte über die Windgeschwindigkeit (V), Messwerte über die Schräganströmung (23, 24) und/oder Messwerte über die Scherung (21, 22) zu verarbeiten, um die Steuervorgabe (29) für das zyklische Pitchen der Windenergieanlage (14) zu ermitteln.

9. Steuerung nach einem der Ansprüche 1 bis 8, **dadurch gekennzeichnet, dass** die Pitchkurve des zyklischen Pitchens eine lineare Überlagerung aus einer ersten Teilkurve und einer zweiten Teilkurve ist, wobei die erste Teilkurve der Schräganströmung (23, 24) zugeordnet ist und wobei die zweite Teilkurve der Scherung (21, 22) zugeordnet ist.

10. Steuerung nach Anspruch 9, **dadurch gekennzeichnet, dass** die Winkelposition des Rotors, in der der Nulldurchgang der ersten Teilkurve erfolgt, relativ zur Richtung der Schräganströmung (23, 24) definiert ist.

11. Steuerung nach Anspruch 10, **dadurch gekennzeichnet, dass** der Nulldurchgang der ersten Teilkurve bei einer höheren Windgeschwindigkeit im Wesentlichen in einer Winkelposition des Rotors (15) erfolgt, in der das Rotorblatt die Richtung der Schräganströmung (23, 24) kreuzt, und dass der Nulldurchgang bei einer niedrigeren Windgeschwindigkeit zu einen späteren Zeitpunkt erfolgt.

12. Steuerung nach einem der Ansprüche 1 bis 11, **dadurch gekennzeichnet, dass** Forward-Messwerte der Windparameter (V, 21, 22, 23, 24) verarbeitet werden.

13. Steuerung nach Anspruch 12, **dadurch gekennzeichnet, dass** ein an einem Rotorblatt eines Rotors aufgenommener Messwert eines Windparameters (V, 21, 22, 23, 24) als Forward-Messwert für ein anderes Rotorblatt des Rotors verwendet wird.

14. Steuerung nach einem der Ansprüche 1 bis 13, **dadurch gekennzeichnet, dass** die Steuerung für die Betriebssteuerung des Pitchwinkels zuständig ist und dass die Steuervorgabe für das zyklische Pitchen der Steuervorgabe der Betriebssteuerung lineare überlagert wird.

15. Steuerungsverfahren für eine Windenergieanlage (14), bei dem Messwerte (27) und/oder externe Vorgaben (28) verarbeitet werden, um Steuervorgaben (29) für ein zyklisches Pitchen der Windenergieanlage (14) zu ermitteln, **dadurch gekennzeichnet, dass** anhand einer Kennlinie (33) der Amplitude des zyklischen Pitchens über einem Windparameter (V, 21, 22, 23, 24) unter Verarbeitung eines Messwerts des Windparameters (V, 21, 22, 23, 24) eine Steuervorgabe (29) für die Amplitude des zyklischen Pitchens ermittelt wird, wobei die Kennlinie (33) einen Extrempunkt (39) aufweist, von dem aus die Kennlinie (33) in beiden Richtungen ansteigt bzw. abfällt.

## Claims

1. Controller for a wind turbine (14), wherein the controller (25) is configured to process measured values (27) and/or external specifications (28), in order to determine control specifications (29) for cyclical pitching of the wind turbine (14), **characterized in that** a characteristic curve (33) of the amplitude of the cyclical pitching plotted against a wind parameter (V, 21, 22, 23, 24) is stored in the controller (25), wherein the characteristic curve (33) has an extreme point (39) from which the characteristic curve (33) rises or falls in both directions, and **in that** the controller (25) is configured to determine a control specification (29) for the amplitude of the cyclical pitching from a measured value of the wind parameter (V, 21, 22, 23, 24) on the basis of the characteristic curve (33).

2. Controller according to Claim 1, **characterized in that** the characteristic curve (33) is assigned to an operating state or to a plurality of operating states in which the wind turbine (14) is subjected to an oblique oncoming flow (23, 24).

3. Controller according to Claim 1 or 2, **characterized in that** the amplitude of the cyclical pitching is plotted against the wind speed (V) in the characteristic curve (33) .

4. Controller according to Claim 3, **characterized in that** the characteristic curve (33) falls starting with a relatively low wind speed (V) until the characteristic curve (33) drops to an extreme value (39) at a medium wind speed (V), and **in that** as the wind speed (V) increases further the characteristic curve (33) rises again.

5. Controller according to Claim 4, **characterized in that** at the extreme point (39) the characteristic curve (33) drops to zero.

6. Controller according to one of Claims 1 to 5, **characterized in that** the phase of the cyclical pitching reverses when the extreme value (39) is exceeded.

7. Controller according to one of Claims 1 to 6, **characterized in that** the characteristic curve (33) is assigned to an operating state or to a plurality of operating states in which the wind turbine (14) is subjected to shearing.

8. Controller according to one of Claims 1 to 7, **characterized in that** said controller is configured to process measured values relating to the wind speed (V), measured values relating to the oblique oncoming flow (23, 24) and/or measured values relating to the shearing (21, 22), in order to determine the control specification (29) for the cyclical pitching of the wind turbine (14).

9. Controller according to one of Claims 1 to 8, **characterized in that** the pitch curve of the cyclical pitching is a linear superimposition composed of a first partial curve and a second partial curve, wherein the first partial curve is assigned to the oblique oncoming flow (23, 24) and wherein the second partial curve is assigned to the shearing (21, 22).

10. Controller according to Claim 9, **characterized in that** the angular position of the rotor at which the zero crossover of the first partial curve takes place is defined relative to the direction of the oblique oncoming flow (23, 24) .

11. Controller according to Claim 10, **characterized in that** at a relatively high wind speed the zero crossover of the first partial curve occurs essentially at an angular position of the rotor (15) in which the rotor blade intercepts the direction of the oblique oncoming flow (23, 24), and **in that** at a relatively low wind speed the zero crossover occurs at a later point in time.

12. Controller according to one of Claims 1 to 11, **characterized in that** forward measured values of the wind parameters (V, 21, 22, 23, 24) are processed.

13. Controller according to Claim 12, **characterized in that** a measured value, recorded at a rotor blade of a rotor, of a wind parameter (V, 21, 22, 23, 24), is used as a forward measured value for another rotor blade of the rotor.

14. Controller according to one of Claims 1 to 13, **characterized in that** the controller is responsible for the operational control of the pitch angle, and **in that** the control specification for the cyclical pitching is superimposed linearly on the control specification of the operational controller.

15. Control method for a wind turbine (14), in which measured values (27) and/or external specifications (28) are processed in order to determine control specifications (29) for cyclical pitching of the wind turbine (14), **characterized in that**, on the basis of the characteristic curve (33) of the amplitude of the cyclical pitching plotted against a wind parameter (V, 21, 22, 23, 24), a control specification (29) for the amplitude of the cyclical pitching is determined by processing a measured value of the wind parameter (V, 21, 22, 23, 24), wherein the characteristic curve (33) has an extreme point (39) from which the characteristic curve (33) rises or falls in both directions.

## Revendications

1. Commande pour une éolienne (14), la commande (25) étant conçue pour traiter des valeurs de mesure (27) et/ou des valeurs prédéfinies externes (28) afin de déterminer des valeurs prédéfinies de commande (29) pour un ajustement de pas cyclique de l'éolienne (14), **caractérisée en ce qu'**une courbe caractéristique (33) de l'amplitude de l'ajustement de pas cyclique par rapport à un paramètre de vent (V, 21, 22, 23, 24) est consignée dans la commande (25), la courbe caractéristique (33) présentant un point extrême (39) à partir duquel la courbe caractéristique (33) augmente ou descend dans les deux directions, et **en ce que** la commande (25) est conçue de manière à déterminer, à partir d'une valeur de mesure du paramètre de vent (V, 21, 22, 23, 24), à l'aide de la courbe caractéristique (33), une valeur prédéfinie de commande (29) pour l'amplitude de l'ajustement de pas cyclique.

2. Commande selon la revendication 1, **caractérisée en ce que** la courbe caractéristique (33) est associée à un état de fonctionnement ou à plusieurs états de fonctionnement dans lesquels l'éolienne (14) est exposée à un afflux oblique (23, 24).

3. Commande selon la revendication 1 ou 2, **caractérisée en ce que** l'amplitude de l'ajustement de pas cyclique par rapport à la vitesse du vent (V) est reportée sur la courbe caractéristique (33).

4. Commande selon la revendication 3, **caractérisée en ce que** la courbe caractéristique (33) diminue, en commençant à partir d'une plus faible vitesse du vent (V) jusqu'à ce que la courbe caractéristique (33) descende jusqu'à un point extrême (39) à une vitesse moyenne du vent (V) et **en ce que** la courbe caractéristique (33) augmente à nouveau avec une nouvelle augmentation de la vitesse du vent (V).

5. Commande selon la revendication 4, **caractérisée en ce que** la courbe caractéristique (33) descend jusqu'à zéro au point extrême (39).

6. Commande selon l'une quelconque des revendications 1 à 5, **caractérisée en ce que** la phase d'ajustement de pas cyclique s'inverse lors du dépassement du point extrême (39).

7. Commande selon l'une quelconque des revendications 1 à 6, **caractérisée en ce que** la courbe caractéristique (33) est associée à un état de fonctionnement ou à plusieurs états de fonctionnement dans lesquels l'éolienne (14) est exposée à un cisaillement.

8. Commande selon l'une quelconque des revendications 1 à 7, **caractérisée en ce qu'**elle est prévue pour traiter des valeurs de mesure concernant la vitesse du vent (V), des valeurs de mesure concernant l'afflux oblique (23, 24) et/ou des valeurs de mesure concernant le cisaillement (21, 22), afin de déterminer la valeur prédéfinie de commande (29) pour l'ajustement de pas cyclique de l'éolienne (14) .

9. Commande selon l'une quelconque des revendications 1 à 8, **caractérisée en ce que** la courbe de pas de l'ajustement de pas cyclique est une superposition linéaire d'une première courbe partielle et d'une deuxième courbe partielle, la première courbe partielle étant associée à l'afflux oblique (23, 24) et la deuxième courbe partielle étant associée au cisaillement (21, 22).

10. Commande selon la revendication 9, **caractérisée en ce que** la position angulaire du rotor dans laquelle s'effectue le passage par zéro de la première courbe partielle est définie par rapport à la direction de l'afflux oblique (23, 24).

11. Commande selon la revendication 10, **caractérisée en ce que** le passage par zéro de la première courbe partielle s'effectue à une vitesse du vent plus élevée sensiblement dans une position angulaire du rotor (15) dans laquelle la pale de rotor intersecte la direction de l'afflux oblique (23, 24), et **en ce que** le passage par zéro s'effectue à une vitesse du vent plus faible à un instant ultérieur.

12. Commande selon l'une quelconque des revendications 1 à 11, **caractérisée en ce que** des valeurs de mesure d'avance des paramètres de vent (V, 21, 22, 23, 24) sont traitées.

13. Commande selon la revendication 12, **caractérisée en ce qu'**une valeur de mesure d'un paramètre de vent (V, 21, 22, 23, 24) enregistrée au niveau d'une pale de rotor d'un rotor est utilisée en tant que valeur de mesure d'avance pour une autre pale de rotor du rotor.

14. Commande selon l'une quelconque des revendications 1 à 13, **caractérisée en ce que** la commande est chargée de la commande du fonctionnement de l'angle de pas et **en ce que** la valeur prédéfinie de commande pour l'ajustement de pas cyclique est superposée sous forme linéaire à la valeur prédéfinie de commande de la commande de fonctionnement.

15. Procédé de commande pour une éolienne (14), dans lequel des valeurs de mesure (27) et/ou des valeurs prédéfinies externes (28) sont traitées afin de déterminer des valeurs prédéfinies de commande (29) pour un ajustement de pas cyclique de l'éolienne (14), **caractérisé en ce qu'**à l'aide d'une courbe caractéristique (33) de l'amplitude de l'ajustement de pas cyclique par rapport à un paramètre de vent (V, 21, 22, 23, 24), une valeur prédéfinie de commande (29) pour l'amplitude de l'ajustement de pas cyclique est déterminée en traitant une valeur de mesure du paramètre de vent (V, 21, 22, 23, 24), la courbe caractéristique (33) présentant un point extrême (39) à partir duquel la courbe caractéristique (33) augmente ou descend dans les deux directions.
